# EUROPÄISCHE PATENTSCHRIFT

(11) **EP 0 376 994 B1**
(45) Veröffentlichungstag und Bekanntmachung des Hinweises auf die Patenterteilung: **28.07.1993**
(21) Anmeldenummer: 89904543.9
(22) Anmeldetag: 03.04.1989
(51) Int. Cl.: H02M 3/28, H01F 7/06, G01N 21/31

(54) **EINRICHTUNG ZUR ERZEUGUNG EINES MAGNETFELDES IN EINEM ATOMABSORPTIONS-SPEKTROMETER**
DEVICE FOR PRODUCING A MAGNETIC FIELD IN AN ATOMIC ABSORPTION SPECTROMETER
AGENCEMENT GENERATEUR DE CHAMP MAGNETIQUE DANS UN SPECTROMETRE A ABSORPTION ATOMIQUE

(30) Priorität: 06.04.1988 DE 3811446
(43) Veröffentlichungstag der Anmeldung: 11.07.1990
(73) Patentinhaber: BODENSEEWERK PERKIN-ELMER GMBH, D-88662 Überlingen (DE)
(72) Erfinder: ROEDEL, Günther, D-7776 Owingen (DE); ROGASCH, Klaus, Peter, D-7772 Uhldingen-Mühlhofen 1 (DE)
(74) Vertreter: Grünecker, Kinkeldey, Stockmair & Schwanhäusser Anwaltssozietät
(86) Internationale Anmeldenummer: EP8900355
(87) Internationale Veröffentlichungsnummer: WO8910025

(56) Entgegenhaltungen:
- EP-A- 0 091 692
- DE-A- 2 256 521
- DE-A- 2 452 077
- FR-A- 2 121 209
- US-A- 3 676 004
- Wireless World, vol. 90, No: 1583, September 1984, (Oldhill, Dunstable, GB), K.L. Smith: "D.C. supplies from A.C. sources", pages 25-29
- Elektrotechnische Zeitschrift E.T.Z., vol. 107, No: 5, March 1986, (Berlin, DE), W. Keuter et al.: "Schaltungen von Stellern mit modernen Halbleiter-Bauelementen", pages 200-202, 204, 206, 207 see page 200, right column, lines 25-47

## Beschreibung

### Technisches Gebiet

Die Erfindung betrifft ein Atomabsorptions-Spektrometer, bei welchem eine Kompensation der Untergrundabsorption mittels eines Magnetfeldes erfolgt, das durch den Zeeman-Effekt eine periodische Linienverschiebung hervorruft, enthaltend
(a) eine linienemittierende Lichtquelle, welche ein Meßlichtbündel aussendet mit dem Linienspektrum eines gesuchten Elements,
(b) eine Atomisierungseinrichtung zum Atomisieren einer zu untersuchenden Probe zur Bildung einer Atomwolke, in welcher die in der Probe enthaltenen Atome des gesuchten Elements in atomarer Form vorliegen,
(c) ein optisches System, mittels dessen das Meßlichtbündel durch die Atomwolke der Atomisierungseinrichtung hindurchleitbar ist, und
(d) einen periodisch ein- und auschaltbaren Elektromagneten zur Erzeugung des Zeeman-Effektes am Ort der Atomisierungseinrichtung.

Atomabsorptions-Spektrometer dienen zur Bestimmung der Menge oder Konzentration eines gesuchten Elementes in einer Probe. Zu diesem Zweck wird von einer linienemittierenden Lichtquelle, beispielsweise einer Hohlkathodenlampe, ein Meßlichtbündel auf einen photoelektrischen Detektor geleitet. Im Strahlengang dieses Meßlichtbündels ist eine Atomisierungsvorrichtung angeordnet. In dieser Atomisierungsvorrichtung wird die zu untersuchende Probe atomisiert, so daß ihre Bestandteile in atomarem Zustand vorliegen. Das Meßlichtbündel enthält die Resonanzlinien des gesuchten Elements. Diese Resonanzlinien des Meßlichtbündels werden von den Atomen des gesuchten Elements in der Atomwolke absorbiert, während im Idealfall die anderen in der Probe enthaltenen Elemente das Meßlichtbündel nicht beeinflussen. Das Meßlichtbündel erfährt daher eine Schwächung, die ein Maß für die Anzahl der im Weg des Meßlichtbündels befindlichen Atome des gesuchten Elements und damit je nach dem angewandten Atomisierungsverfahren ein Maß für die Konzentration oder die Menge des gesuchten Elementes in der Probe darstellt. Die Absorption, die das Meßlichtbündel erfährt, wird aber nicht nur durch die Atome des gesuchten Elements hervorgerufen. Es gibt eine "Untergrundabsorption", beispielsweise infolge der Absorption des Lichts durch Moleküle. Diese Untergrundabsorption muß insbesondere bei hochempfindlichen Messungen kompensiert werden.

Als Atomisierungsvorrichtung kann eine Flamme dienen, in welche eine Probe als Lösung eingesprüht wird. Für hochempfindliche Messungen verwendet man aber vorzugsweise die elektrothermische Atomisierung: Die Probe wird in einen Ofen eingebracht, der durch Hindurchleiten von elektrischem Strom auf eine hohe Temperatur aufgeheizt wird. Dadurch wird die Probe in dem Ofen zunächst getrocknet, dann verascht und schließlich atomisiert. In dem Ofen bildet sich dann eine "Atomwolke" aus, in welcher das gesuchte Element in atomarer Form vorliegt. Das Meßlichtbündel wird durch diesen Ofen hindurchgeleitet. Diese Öfen können verschiedene Form haben. Sie werden üblicherweise aus Graphit hergestellt.

Zur Untergrundkompensation wird der "Zeeman-Effekt" ausgenutzt. Wenn an die absorbierenden Atome in der atomisierten Probe ein Magnetfeld angelegt wird, dann erfolgt eine Aufspaltung und Verschiebung der Resonanzlinien dieser Atome. Die Resonanzlinien der Atome fallen dann nicht mehr mit den Spektrallinien des Meßlichtbündels zusammen und es erfolgt im Grenzfall keine atomare Absorption mehr. Dadurch kann zwischen nicht-atomarer Untergrundabsorption, die auch bei anliegendem Magnetfeld auftritt, und echter Atomabsorption, die bei nicht-anliegendem Magnetfeld der Untergrundabsorption überlagert ist, unterschieden werden.

Es ist dazu erforderlich, einen Elektromagneten in einem Atomabsorptions-Spektrometer abwechselnd ein- und auszuschalten, um die Atomabsorption mit und ohne Zeeman-Effekt messen zu können. Die Erfindung bezieht sich auf eine Einrichtung, welche dies bewirkt.

### Zugrundeliegender Stand der Technik

Durch die DE-AS 1 964 469 (US-A-3676004) ist ein Atomabsorptions-Spektrometer bekannt, bei welchem die Strahlung von einer einzigen, als Linienstrahler ausgebildeten Strahlungsquelle ausgeht, deren durch die Probe tretende Strahlung unter Ausnutzung des longitudinalen Zeeman-Effektes frequenzmoduliert wird. Bei diesem bekannten Atomabsorptions-Spektrometer sitzt eine Kohlkathodenlampe zwischen den Polschuhen eines Elektromagneten. Einer der Polschube weist eine Bohrung auf, durch welche das Meßlichtbündel hindurchtritt. Das Meßlichtbündel tritt dann durch eine als Atomisierungsvorrichtung dienende Flamme und einen Monochromator und fällt auf einen photoelektrischen Detektor. Der Elektromagnet ist ein- und ausschaltbar, wobei aus der Differenz der Signale bei aus- und eingeschaltetem Elektromagneten die atomare, hinsichtlich der Untergrundabsorption kompensierte Absorption der Probenatome bestimmt werden kann. Die Wicklungen des Elektromagneten sitzen dort auf den Polschuhen.

Bei dem bekannten Atomabsorptions-Spektrometer werden die Emissionslinien der linienemittierenden Lichtquelle durch den Zeeman-Effekt periodisch verschoben und damit das emittierte Licht frequenzmoduliert und nicht die Absorptionslinien der Probe. Das kann bei Verwendung einer Hohlkathodenlampe als Lichtquelle zu Problemen führen, da die Entladung der Hohlkathodenlampe durch das Magnetfeld beeinflußt wird, worauf auch schon in der DE-AS 1 964 469 hingewiesen wird.

Durch die DE-PS 2 165 106 (FR-A-2121209) ist es bekannt, das Magnetfeld eines ein- und ausschaltbaren Elektromagneten statt an die Lichtquelle an die Atomisierungsvorrichtung anzulegen, also an die atomisierte Probe. Die Atomisierungsvorrichtung ist dabei eine Flamme. Das Magnetfeld wird senkrecht zur Laufrichtung des Meßlichtbündels angelegt. Es erfolgt hier eine Aufspaltung der Absorptionslinien infolge des "transversalen" Zeeman-Effektes, was wiederum eine Relativverschiebung der Emissionslinien des Meßlichtbündels und der Absorptionslinien der Probe bewirkt. Durch Ein- und Ausschalten des Magnetfeldes kann wieder zwischen atomarer Absorption durch die Atome des gesuchten Elements und unspezifischer Untergrundabsorption unterschieden werden.

Bei der Anwendung des transversalen Zeeman-Effektes erfolgt die Aufspaltung einer Spektrallinie in eine zentrale Linie, deren Wellenlänge der unverschobenen Wellenlänge der betreffenden Linie bei abgeschaltetem Magnetfeld entspricht, und zwei demgegenüber zu höheren und zu niedrigeren Wellenlängen hin verschobenen Seitenlinien. Die zentrale Linie und die Seitenlinien sind unterschiedlich polarisiert. Man kann daher den Einfluß der zentralen Linie durch eine Polarisator eliminieren.

Bei bekannten Atomabsorptions-Geräten, bei denen durch einen Elektromagneten ein Magnetfeld erzeugt wird, das den Zeeman-Effekt hervorruft, wird der Magnet mit einweggleichgerichteter Netzwechselspannung erregt. Für die Messung der Untergrundabsorption bei Auftreten des Zeeman-Effektes wird ein schmaler Bereich der Halbwelle der Netzwechselspannung um das Maximum der Halbwelle herum ausgenutzt. Dadurch ergibt sich für die Messung der Untergrundabsorption nur ein ziemlich kurzes Nutzsignal. Dieses Nutzsignal wird stark von der Netzfrequenz und der Netzspannungsamplitude beeinflußt.

Für eine Aufspaltung der Spektrallinien durch den Zeeman-Effekt, die eine saubere Trennung von Emissions- und Absorptionslinien ermöglicht, benötigt man ein sehr starkes Magnetfeld. Es muß dazu ein starker Erregerstrom in der Wicklung des Elektromagneten erzeugt werden. Dieser Strom wird bei den bekannten Absorptions-Spektrometern aus der Netzspannung erzeugt. Der Leistungsbedarf des Elektromagneten, der in den bekannten Atomabsorptions-Spektrometern den Zeeman-Effekt hervorruft, ist recht erheblich. Das bringt u.a. eine unerwünschte Erwärmung mit sich.

### Offenbarung der Erfindung

Der Erfindung liegt die Aufgabe zugrunde, bei einer Einrichtung der vorliegenden Art, die Dauer des Nutzsignals bei der Messung mit anliegendem Magnetfeld zu verlängern.

Schließlich wird angestrebt, die Leistungsaufnahme des Elektromagneten und damit auch die Verlustleistung gegenüber bekannten Anordnungen zu vermindern.

Erfindungsgemäß wird diese Aufgabe dadurch gelöst, daß
(e) eine Wandlerschaltung zur Umwandlung der Netzwechselspannung in eine an einem Kondensator anliegende Gleichspannung vorgesehen ist,
(f) die Wicklung des Elektromagneten in der Diagonale einer Brückenschaltung liegt, die
   - von der Gleichspannung der besagten Schaltung gespeist ist,
   - in diametral gegenüberliegenden Zweigen je eine Diode und in den beiden anderen Zweigen je einen ersten und einen zweiten gesteuerten Schalter aufweist,
g) der erste der gesteuerten Schalter von einer Steuereinrichtung mit der Ein- und Ausschaltfrequenz des Elektromagneten periodisch für eine den Aufbau und die Aufrechterhaltung des Magnetfeldes umfassende aktive Zeitspanne leitend gehalten und während der übrigen Zeit nichtleitende ist,
(h) der zweite der gesteuerten Schalter während der besagten aktiven Zeitspanne des ersten Schalters von einem Zweipunkt-Stromregler zur Regelung eines vorgegebenen, durch die Wicklung des Elektromagneten fließenden Stromes gesteuert und während der übrigen Zeit ebenfalls nichtleitend ist, so daß ein im wesentlichen trapezförmiger Stromverlauf entsteht, und
(i) im nichtleitenden Zustand beider gesteuerter Schalter die Wicklung des Elektromagneten in Reihe mit den Dioden an dem Kondensator der Wandlerschaltung liegt.

Die Netzwechselspannung speist somit nicht unmittelbar den Elektromagneten. Vielmehr wird aus der Netzwechselspannung zunächst eine Gleichspannung erzeugt. Diese Gleichspannung wird dann geeignet gepulst auf die Wicklung des Elektromagneten geschaltet. Die Frequenz dieser Aufschaltung ist nicht mehr an die Netzfrequenz gebunden. Es ist auch nicht erforderlich, die Messung mit Zeeman-Effekt auf einen schmalen Bereich um das Maximum einer Halbwelle zu beschränken. Es können vielmehr günstigere Signalverläufe des Magnetfeldes erreicht werden.

Ausgestaltungen der Erfindung sind Gegenstand der abhängigen Unteransprüche.

### Kurze Beschreibung der Zeichnungen

- Fig. 1: zeigt schematisch den Aufbau eines Atomabsorptions-Spektrometers, bei welchem die Untergrundabsorption durch Ausnutzung des longitudinalen Zeeman-Effektes kompensiert wird.
- Fig. 2: ist ein Blockschaltbild und zeigt das Netzteil zum periodischen Ein- und Ausschalten des Elektromagneten.
- Fig. 3: zeigt im einzelnen die Schaltung zur Steuerung des Stromes durch die Wicklung des Elektromagneten.
- Fig. 4: zeigt den zeitlichen Verlauf des Stromes in der Wicklung des Elektromagneten und die Schaltzustände der gesteuerten Schalter in der Schaltung von Fig. 3.
- Fig. 5: zeigt den zeitlichen Verlauf des Stromes in der Wicklung des Elektromagneten, die Einschaltphasen der linienemittierenden Lichtquelle und die verschiedenen Messphasen der Signalverarbeitung bei dem Atomabsorptions-Spektrometer von Fig. 1.
- Fig. 6: zeigt den zeitlichen Verlauf des Stromes und die verschiedenen Messphasen bei "Dreifeldbetrieb" zur Erweiterung des dynamischen Messbereichs des Atomabsorptions-Spektrometers.

### Bevorzugte Ausführung der Erfindung

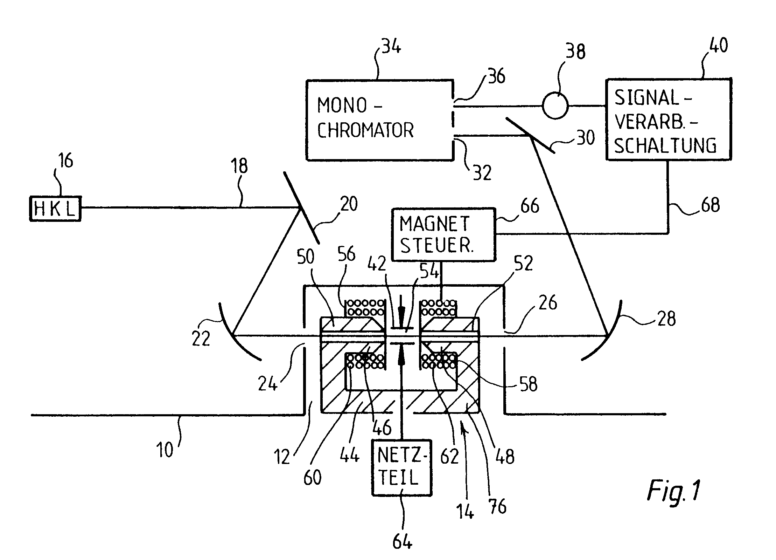

Fig. 1 ist eine schematische Darstellung des gesamten Atomabsorptions-Spektrometers.

Das Atomabsorptions-Spektrometer weist ein Gehäuse 10 auf, in welchem die Lampen, das optische System und der photoempfindliche Detektor angeordnet sind. Das Gehäuse 10 bildet einen Probenraum 12. In dem Probenraum 12 ist eine Atomisierungsvorrichtung 14 angeordnet.

Das Atomabsorptions-Spektrometer weist als Lichtquelle 16 eine Hohlkathodenlampe auf. Die Lichtquelle 16 emittiert ein Linienspektrum, das den Resonanzlinien eines bestimmten, gesuchten Elements entspricht. Von der Lichtquelle 16 geht ein Messlichtbündel 18 aus. Das Messlichtbündel 18 wird von einem Planspiegel 20 umgelenkt und von einem Hohlspiegel 22 durch eine Öffnung 24 des Gehäuses 10 hindurch in der Mitte des Probenraumes gesammelt. Das Messlichtbündel 18 tritt dann durch eine mit der Öffnung 24 fluchtenden Öffnung 26 des Gehäuses 10 und fällt auf einen zweiten Hohlspiegel 28. Von dem zweiten Hohlspiegel 28 wird das Messlichtbündel 18 über einen Planspiegel 30 auf dem Entrittsspalt 32 eines Monochromators 34 fokussiert. Hinter einem Austrittsspalt 36 des Monochromators 34 sitzt ein photoelektrischer Detektor 38. Das Signal des photoelektrischen Detektors 38 beaufschlagt eine Signalverarbeitungs-Schaltung 40.

Die Atomisierungsvorrichtung 14 enthält einen Ofen zur elektrothermischen Atomisierung, von welchem in Fig. 1 nur der eigentliche Ofenkörper 42 dargestellt ist, und einen ein- und ausschaltbaren Elektromagneten 44 zur Erzeugung eines Magnetfeldes am Ort der Probe. Der Elektromagnet 44 weist zwei fluchtende Polschuhe 44 und 46 auf, zwischen denen der Ofenkörper 42 sitzt. In den Polschuhen 46 und 48 sind fluchtende Bohrungen 50 und 52 angebracht. Die Bohrungen 50 und 52 fluchten mit einer Längsbohrung 54 des Ofenkörpers 42. Das Messlichtbündel 18 verläuft durch die Bohrungen 50 und 52 und durch die Längsbohrung des Ofenkörpers. Auf den Polschuhen 50 und 52 sitzen Spulenhalterungen 56 bzw. 58. Auf diese Spulenhalterungen 56 und 58 sind Spulen 60 bzw. 62 des Elektromagneten 44 gewickelt. Mit 64 ist ein Netzteil bezeichnet, welches den Strom durch den Ofenkörper 42 steuert. Wie angedeutet, wird der Strom quer zur Laufrichtung des Messlichtbündels 18 zugeführt und fliesst in Umfangsrichtung durch den rohrförmigen Ofenkörper 42. Der Elektromagnet 44 ist von einem Netzteil 66 gesteuert, derart, dass das Magnetfeld abwechselnd ein- und ausgeschaltet wird. Das Magnetfeld des Elektromagneten 44 verläuft am Ort der Probe innerhalb des Ofenkörpers in Laufrichtung des Messlichtbündels 18. Bei eingeschaltetem Magnetfeld wird daher an den Probenatomen der longitudinale Zeeman-Effekt hervorgerufen. Das bedeutet, dass die Absorptionslinien der Probenatome in jeweils zwei Linien aufgespalten werden, die gegenüber der ungestörten ursprünglichen Absorptionslinie verschoben sind. Bei der Wellenlänge der ursprünglichen Absorptionslinie erfolgt keine atomare Absorption in der Probe mehr. Daher absorbieren auch die Atome des gesuchten Elements das Messlichtbündel 18 nicht mehr, da dieses Messlichtbündel nur die unverschobenen für das Element charakteristischen Resonanzlinien enthält. Bei eingeschaltetem Magnetfeld wird daher nur die Untergrundabsorption gemessen. Aus den Messungen bei ein- und ausgeschaltetem Magnetfeld wird daher nur die Untergrundabsorption gemessen. Aus den Messungen bei ein- und ausgeschaltetem Magnetfeld kann der hinsichtlich der Untergrundabsorption korrigierte Anteil der echten Atomabsorption bestimmt werden. Der Takt der Ein- und Ausschaltung des Elektromagneten 44 wird zu diesem Zweck auf die Signalauswertungs-Schaltung 40 gegeben, wie durch eine Leitung 68 angedeutet ist. Durch die Anwendung des londitudinalen Zeeman-Effektes wird ein Polarisator im Strahlengang entbehrlich und das Nutzsignal verbessert.

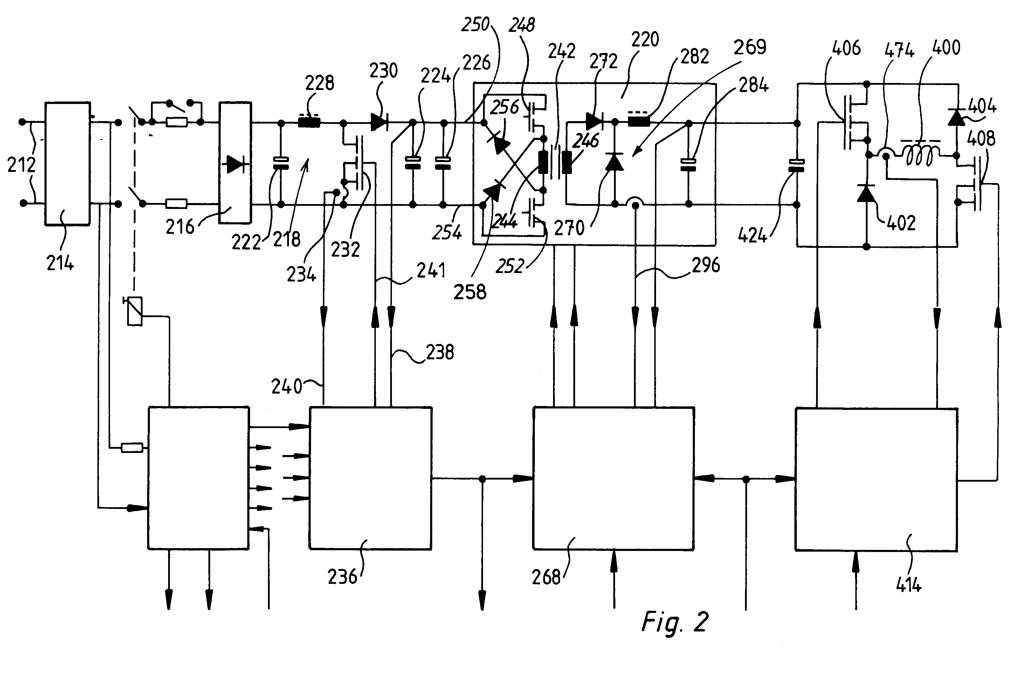

Fig. 2 zeigt ein Blockschaltbild und zeigt das Netzteil 66 von Fig. 1.

Die Netzspannung liegt an Eingangsklemmen 212. Sie wird über ein Filter 214 zur Entstörung geleitet und durch einen Gleichrichter 216 gleichgerichtet. Die gleichgerichtete Netzspannung ist auf einen geschalteten Hochsetzsteller 218 aufgeschaltet, durch welchen die gleichgerichtete Netzspannung geglättet und eine geregelte Gleichspannung erzeugt wird. Der Hochsetzsteller 218 sorgt ausserdem dafür, dass dem Netz ein sinusförmiger Strom entnommen wird. Die geregelte Gleichspannung von dem Hochsetzsteller 218 bildet die eingangsseitige Gleichspannung für einen dem Hochsetzsteller 218 nachgeschalteten, noch zu beschreibenden Wandler 220.

Der Hochsetzsteller 218 enthält einen Kondensator 222 am Eingang und Kondensatoren 224 und 226, die zueinander parallelgeschaltet sind, am Ausgang. Der Hochsetzsteller 218 enthält weiterhin eine Drossel 228 und eine Diode 230. Ein Transistor 232 als gesteuerter Schalter schliesst den Stromkreis über die Drossel 228. Bei gesperrtem Transistor 232 wirkt die Diode 230 als Freilaufdiode, über welche die bei Sperren des Transistors 232 in der Drossel induzierte Spannung die Kondensatoren 224, 226 auflädt.

In Reihe mit dem Transistor 232 ist ein Stromfühler 234 angeordnet. Ein Regler 236 erhält die an den Kondensatoren 224 und 226 anliegende Gleichspannung über eine Leitung 238 und ein Signal von dem Stromfühler 234 über eine Leitung 240. Der Regler 236 steuert den Transistor 232 über eine Leitung 241.

Die Kondensatoren 224 und 226 liefern die eingangsseitige Gleichspannung für den Wandler 220.

Der Wandler 220 enthält einen Transformator 242 mit einer Primärwicklung 244 und einer Sekundärwicklung 246. Die Primärwicklung 244 ist an einem ersten Ende über einen Schalttransistor 248 mit einer positiven Eingangsklemme 250 verbunden, die an entsprechenden Klemmen der Kondensatoren 224, 226 liegt. Die Primärwicklung ist an ihrem zweiten Ende über einen Schalttransistor 252 mit einer negativen Eingangsklemme 254 verbunden, die an den entsprechenden anderen Klemmen der Kondensatoren 224, 226 liegt. Das zweite Ende der Primärwicklung 244 ist über eine Diode 256 mit der positiven Eingangsklemme 250 verbunden. Die Durchlaßrichtung der Diode 256 ist dabei von dem zweiten Ende der Primärwicklung 244 zu der Eingangsklemme 250 hin. Das erste Ende der Primärwicklung 244 ist über eine Diode 258 mit der negativen Eingangsklemme 254 verbunden. Die Durchlaßrichtung der Diode 258 ist dabei von der Eingangsklemme 254 zu dem ersten Ende der Primärwicklung 244 hin.

Die Schalttransistoren 248 und 252 werden von einer Schaltung 268 mit relativ hoher Frequenz verglichen mit der Netzfrequenz periodisch durchgeschaltet und gesperrt. Über die Dioden 256, 258 kann der Entmagnetisierungsstrom der Primärwicklung 244 fließen.

An der Sekundärwicklung 246 liegt eine Durchflußwandler-Gleichrichterschaltung 269 mit Dioden 270, 272. Die Durchflußwandler-Gleichrichterschaltung 269 liefert eine Gleichspannung. Die Gleichspannung wird durch eine Drossel 282 und parallelgeschaltete Kondensatoren 284 geglättet. Es wird so eine Gleichspannung an Ausgangsklemmen 286 und 288 erzeugt. Die Kondensatoren 284 dienen gleichzeitig als weiterer Energiespeicher.

Die Wicklung 400 des Elektromagneten 44, die von den Magnetspulen 60 und 62 gebildet ist, liegt in einer Brückenschaltung aus zwei Dioden 402 und 404, die in diametral gegenüberliegenden Zweigen der Brückenschaltung angeordnet sind, und zwei gesteuerten Schaltern 406 und 408. Die Ausgangsspannung der Wandlermittel 220 liegt an der Brückenschaltung an. Die Wicklung 400 des Elektromagneten 44 liegt in der Brückendiagonale. Zwischen der Ausgangsspannung der Wandlermittel 220, die an den Klemmen 410 und 412 anliegt, liegen in Reihe der gesteuerte Schalter 406, die Wicklung 400 mit einem ersten, an den Schalter 406 anschliessenden Ende und einem zweiten, dem Schalter 408 zugewandten Ende und der gesteuerte Schalter 408. Die gesteuerten Schalter 406, 408 sind dabei von Schalttransistoren gebildet. Das zweite Ende der Wicklung 400 ist über die Diode 404 mit der positiven Klemme 410 verbunden. Die Durchlassrichtung der Diode 404 ist dabei von dem zweiten Ende der Wicklung 400 zu der Klemme 410 hin. Das erste Ende der Wicklung 400 ist mit der Klemme 412 über die Diode 402 verbunden. Die Durchlassrichtung der Diode 402 ist dabei von der Klemme 412 zu dem ersten Ende der Wicklung 400 hin.

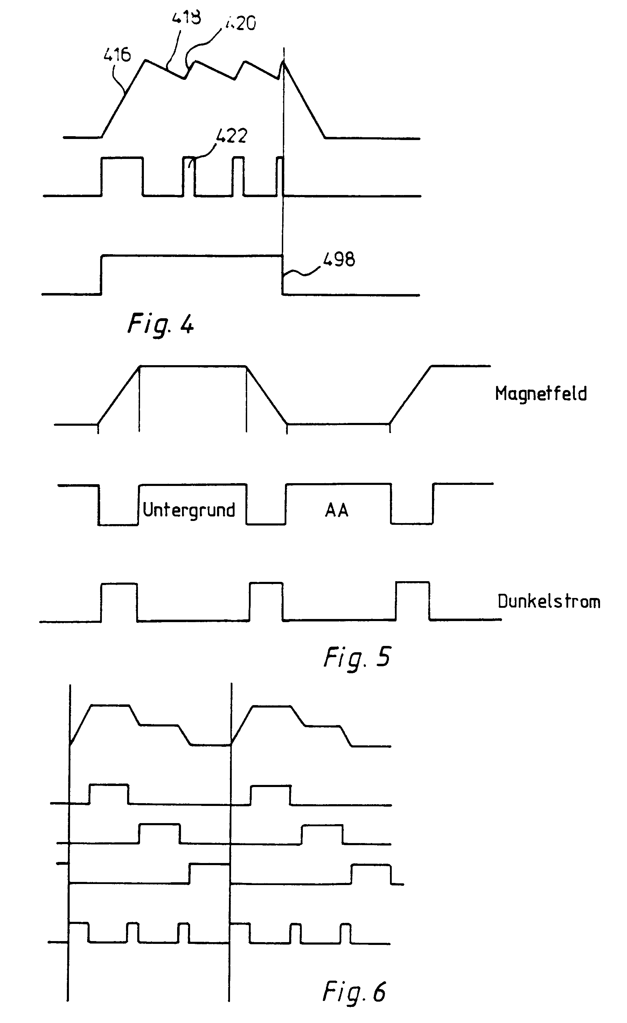

Die Schalter 406 und 408 werden von einer Steuerschaltung 414 gesteuert. Diese Steuerung soll zunächst anhand von Fig. 4 erläutert werden:

In der Abschaltphase sind beide Schalter 406 und 408 geöffnet. Zum Einschalten des Elektromagneten 44 werden beide Schalter 406 und 408 geschlossen. Infolge der grossen Selbstinduktion des Elektromagneten 44 steigt der Strom stetig mit endlicher Steigung an, wie durch die Flanke 416 dargestellt ist. Dieser Anstieg setzt sich fort, bis der Sollwert des Stromes und damit des Magnetfeldes erreicht ist. Zu diesem Zeitpunkt wird der Schalter 406 geöffnet. Dadurch bricht das Magnetfeld zusammen. Das zusammenbrechende Magnetfeld induziert eine Spannung in der Wicklung 400 des Elektromagneten 44, welche den bisherigen Stromfluss aufrechtzuerhalten trachtet. Die Wicklung 400 bildet also eine Spannungsquelle und erzeugt einen Strom im Uhrzeigersinn von Fig. 2 über den Schalter 408 und die Diode 402. Durch Verluste in diesem Stromkreis sinkt der Strom langsam ab, wobei der Abfall langsamer als der Anstieg erfolgt, wie in Fig. 4 bei 418 dargestellt ist. Wenn der Strom unter einen bestimmten Wert abgesunken ist, wird der Schalter 406 wieder geschlossen. Der Strom steigt dann mit der Steigung der Flanke 416 wieder an. Das ist in Fig. 4 bei 420 dargestellt. Der Sollwert des Stromes wird schnell wieder erreicht. Der Schalter 406 ist daher nur kurzzeitig geschlossen, wie durch den Rechteckimpuls 422 dargestellt ist. Die Steuerschaltung 414 wirkt also wie ein Zweipunktregler mit Hysterese, durch welchen während der Einschaltphase der Strom durch die Wicklung 400 nahezu konstant gehalten wird.

Wenn der Elektromagnet wieder abgeschaltet werden soll (Fig. 4, Punkt 498), werden beide Schalter 406 und 408 geöffnet. Auch jetzt sucht die durch das zusammenbrechende Magnetfeld induzierte Spannung den Stromfluss in der ursprünglichen Richtung aufrechtzuerhalten. Dieser Stromfluss erfolgt jetzt jedoch in dem Kreis mit der Diode 404, einem am Eingang der Brückenschaltung liegenden Kondensator 424 und der Diode 402. Auf diese Weise wird der Kondensator 424 wieder aufgeladen. Die in dem Magnetfeld des Elektromagneten gespeicherte Energie wird wieder in den Kondensator 424 zurückgeliefert. Durch diese Massnahme kann der Leistungsbedarf des Elektromagneten für die Erzeugung des Magnetfeldes gering gehalten werden. Das wirkt sich günstig auf die Auslegung der Bauteile aus. Auch wird die Wärmeentwicklung durch den Elektromagneten gegenüber üblichen Anordnungen verringert.

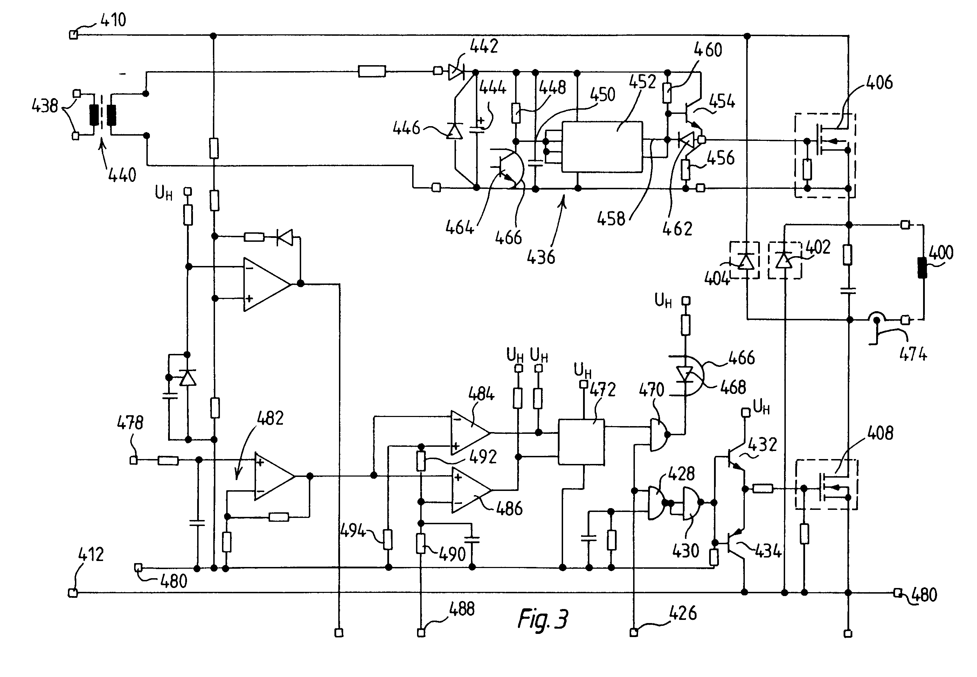

Die Steuerschaltung ist in Fig. 3 im einzelnen dargestellt.

An einem Eingang 426 liegt ein Einschaltsignal, welches die Einschaltung des Elektromagneten 44 einleitet. Dieses Einschaltsignal entspricht dem Signalverlauf in der untersten Zeile von Fig. 4. Über Inverter 428 und 430 und Transistoren 432 und 434 wird der Schalter 408 geschlossen, also der Schalttransistor leitend. Der Schalter 406 wird von einer Treiberstufe 436 potentialfrei gesteuert. Die Treiberstufe 436 wird von der an Netzklemmen 438 anliegenden Netzspannung über einen Transformator 440 gespeist. Die Ausgangsspannung des Transformators 440 wird durch eine Diode 442 gleichgerichtet und lädt einen Kondensator 444 auf. Die an dem Kondensator 444 anliegende Spannung wird durch eine Zener-Diode 446 stabilisiert. Über einen Widerstand 448 liegt die positive Spannung des Kondensators an dem Eingang 450 eines Verstärkers 452. Ein Transistor 454 mit einem Emitterwiderstand 456 liegt ebenfalls an der am Kondensator 444 anliegenden Spannung. Die Basis des Transistors 454 ist einmal mit dem Ausgang 458 des Verstärkers 452 und zum anderen über einen Widerstand 460 mit der positiven Klemme des als Gleichspannungsquelle wirkenden Kondensators 444 verbunden. Der Emitter des Transistors 454 ist über eine Diode 462 mit dem Ausgang 458 des Verstärkers 452 verbunden. Weiterhin ist der Emitter des Transisitors 454 mit der Steuerelektrode des Schalters 406 verbunden. Am Eingang des Verstärkers 452 liegt gegen die negative Klemme des Kondensators 444 ein Phototransistor 464, der einen Teil eines Optokopplers 466 bildet. Der andere Teil des Optokopplers 466 ist eine Leuchtdiode 468 die im rechten unteren Viertel von Fig. 3 dargestellt ist. Wenn die Leuchtdiode 468 nicht leuchtet, ist der Phototransistor 464 nichtleitend. An dem Eingang 450 des Verstärkers liegt die positive Spannung des Kondensators. Dadurch wird der Ausgang 458 des Verstärkers negativ. Der Transistor 454 wird gesperrt. Die Spannung an der Steuerelektrode des Schalters 406 gegenüber der Source wird null und der Schalter 406 wird nichtleitend. Wenn dagegen die Leuchtdiode 468 leuchtet, wird der Phototransistor 464 leitend, die Spannung am Eingang des Verstärkers 452 wird null und die Spannung am Ausgang des Verstärkers 452 wird positiv. Durch die positive Spannung am Ausgang des Verstärkers 452 wird der Transistor 454 leitend. Es liegt dann über die Emitter-Kollektor-Strecke des Transistors 454 die positive Spannung an der Steuerelektrode des Schalters 406. Der Schalter wird leitend.

Das Aufleuchten der Leuchtdiode 468 ist von zwei Bedingungen abhängig: Deshalb liegt die Leuchtdiode 468 zwischen der Gleichstrom-Versorgungsspannung U_{H}, die auch den Zustand "H" (high) der Logikbauteile darstellt, und dem Ausgang einen NAND-Gliedes 470. An einem Eingang des NAND-Gliedes 470 liegt das Steuersignal vom Eingang 426. Am anderen Eingang des NAND-Gliedes 470 liegt der Ausgang eines Flipflops 472. Das Flipflop 472 bildet einen Teil eines mit Hysterese behafteten Zweipunktreglers für den in der Wicklung 400 des Elektromagneten 44 fliessenden Strom. Ein den Strom durch die Wicklung 400 wiedergebendes Signal wird von einem Stromfühler 474 mit Hall-Element geliefert. Dieses Signal liegt an Klemmen 478, 480 an und wird durch einen Verstärker 482 verstärkt. Die Ausgangsspannung des Verstärkers 482 liegt einmal an dem invertierenden Eingang eines ersten Komparators 484 und zum anderen am nichtinvertierenden Eingang eines zweiten Komparators 486 an. Eine den Sollwert des Stromes durch die Wicklung 400 wiedergebende Spannung ist auf eine Eingangsklemme 488 geschaltet. Mittels eines Spannungsteilers bestehend aus drei ohmschen Widerständen 490, 492 und 494 werden von dieser Spannung zwei Teilspannungen abgegriffen. Davon wird die niedrigere auf den nicht-invertierenden Eingang des Komparators 484 und die höhere auf den invertierenden Eingang des Komparators 486 geschaltet. Komparator 484 wird also von "L" (low) auf "H" (high) umgeschaltet, wenn die Ausgangsspannung des Verstärkers 482 die niedrigere Teilspannung unterschreitet. Der andere Komparator 486 wird von L auf H umgeschaltet, wenn die Ausgangsspannung des Verstärkers 482 die höhere Teilspannung überschreitet. Der Ausgang des Komparators 484 setzt das Flipflop 472. Der Ausgang des Komparators 486 setzt das Flipflop 472 zurück.

Während der Ausschaltphase ist das Flipflop 472 gesetzt. Der Komparator 484 war beim Abschalten des Elektromagneten 44 während der vorhergehenden Periode von L auf H umgeschaltet worden und hatte das Flipflop gesetzt. Dementsprechend liegt an dem in Fig. 3 oberen Eingang des NAND-Gliedes 470 das Signal H. Während der Ausschaltphase ist das Signal am Eingang 426 "L". Der Ausgang des NAND-Gliedes ist daher H. Dementsprechend liegt keine Spannung an der Leuchtdiode 468 an. Die Leuchtdiode 468 leuchtet nicht. Dadurch ist der Phototransistor 464 nichtleitend. Das bewirkt, wie oben geschildert wurde, dass auch der Schalter 406 nichtleitend ist. Schalter 408 ist ebenfalls nichtleitend, da er von dem Steuersignal an der Eingangsklemme 426 unmittelbar, d.h. ohne weitere Verknüpfung gesteuert ist.

Wenn an der Eingangsklemme 426 ein Steuersignal H auftritt, entsprechend dem Signalverlauf in der dritten Zeile von Fig. 4, wird der Schalter 408 leitend. Ausserdem erscheint das Signal H auch an dem in Fig. 4 unteren Eingang des NAND-Gliedes 470. Es sind jetzt beide Eingänge des NAND-Gliedes 470 im Zustand H. Infolgedessen geht der Ausgang des NAND-Gliedes 470 in den Zustand L über. Jetzt liegt eine Spannung an der Leuchtdiode 468. Die Leuchtdiode 468 leuchtet auf und macht dadurch die Emitter-Kollektor-Strecke des Phototransistors 464 leitend. Dadurch wird auch der Schalter 406 leitend. Es sind jetzt beide Schalter 406 und 408 leitend. Dadurch liegt die Wicklung 400 an Spannung. Der Strom durch die Wicklung 400 steigt entsprechend der Flanke 416, wie beschrieben, an. Damit steigt auch die Spannung von dem Stromfühler 474 und die Ausgangsspannung des Verstärkers 482. Wenn der Sollwert des Stromes erreicht ist, der durch die höhere Teilspannung am invertierenden Eingang des Komparators 486 bestimmt ist, dann schaltet der Komparator 486 von L auf H. Hierdurch wird das Flipflop 472 zurückgesetzt. Das Ausgangssignal des Flipflops wird L. Dadurch sind nicht mehr beide Eingänge des NAND-Gliedes 470 im Zustand H. Der Ausgang des NAND-Gliedes 470 wird H. Die Leuchtdiode 468 erlischt. Damit sperrt der Phototransistor 464 und der Schalter 406 wird nichtleitend. Hierdurch tritt der im Zusammenhang mit Fig. 4 beschriebene Abfall 418 des Stromes ein, bis die niedrigere Teilspannung am nichtinvertierenden Eingang des Komparators 484 wieder unterschritten wird. Das bewirkt dann wieder ein Setzen des Flipflops und macht den Schalter 406 leitend.

Es wird also der mittlere Strom durch die Wicklung 400 des Elektromagneten 44 zwischen den durch die höhere und die niedrigere Teilspannung bestimmten Werten gehalten.

Wenn das Signal an der Eingangsklemme 426 im Punkt 498 (Fig. 4) wieder auf L abfällt, also die Messzeit für die Untergrundabsorption beendet ist, geht einmal der Schalter 408 in den nichtleitenden Zustand über und geht zum anderen das Signal an dem in Fig. 3 unteren Eingang des NAND-Gliedes 470 in den Zustand L. Das bewirkt ein Signal H am Ausgang des NAND-Gliedes 470 und ein Erlöschen der Leuchtdiode 468. Auch der Schalter 406 wird daher nichtleitend. Es tritt jetzt der geschilderte Effekt ein, dass der von der induzierten Spannung erzeugte Strom über die Dioden 402 und 404 den Kodensator 424 auflädt.

Mit der beschriebenen Anordnung kann somit während einer relativ langen Messzeit das Magnetfeld an den Ofen angelegt und mit Zeeman-Effekt gemessen werden. Die Messung der Untergrundabsorption mit Zeeman-Effekt ist somit nicht wie bei den bekannten Geräten auf eine kurze Zeitspanne um die Maxima der Netzspannung herum beschränkt. Auch ist die Wechselfrequenz, mit welcher das Magnetfeld ein- und ausgeschaltet wird, nicht an die Netzfrequenz gebunden. Durch die mehrfache Regelung von Versorgungsspannung und Magnetstrom sind die Einflüsse von Netzspannungsschwankungen eliminiert.

Die Flanken des trapezförmigen Stromverlaufes werden ausgenutzt, um den "Dunkelstrom" zu bestimmen, d.h. dasjenige Signal, das der Detektor des Atomabsorptions-Spektrometers liefert, wenn die linienemittierende Lichtquelle 16 ausgeschaltet ist. Dieser "Dunkelstrom" ist teils echter Dunkelstrom des Detektors, teils aber auch ein Signal, das durch Emissionen der Probe und des Ofens hervorgerufen wird. Die Lichtquelle 16 wird dementsprechend eingeschaltet, wenn der Elektromagnet 44 voll eingeschaltet ist, also der Strom in der Wicklung 400 dem Sollwert entspricht, oder wenn der Strom in der Wicklung null ist. Dazwischen, während des Anstiegs und des Abfalls des Stromes wird die Lichtquelle 16 ausgeschaltet. Bei eingeschaltetem Elektromagneten 44 wird die Untergrundabsorption bestimmt. Bei ausgeschaltetem Elektromagneten 44 erfolgt eine Messung von Untergrundabsorption plus Atomabsorption. Bei ausgeschalteter Lichtquelle 16 im Bereich der Flanken wird der Dunkelstrom bestimmt. Die beschriebene Schaltung ermöglicht eine Betriebsweise, bei welcher für Untergrundmessung, Atomabsorptionsmessung und Dunkelstrommessung während jedes Messzyklus ungefähr gleiche Zeitintervalle zur Verfügung stehen. Das ist in Fig. 5 dargestellt.

Fig. 6 veranschaulicht eine weitere Betriebsweise, die mit der beschriebenen Einrichtung möglich ist. Es hat sich gezeigt, dass bei einem Atomabsorptions-Spektrometer bei der Zeeman-AAS die Abhängigkeit der logarithmierten Absorption von der Menge des gesuchten Elements in der Probe, u.U. stark nichtlinear ist ("Applied Spectroscopy" Bd. 38 (1984), 141-148). Eine Linearisierung kann erreicht werden, indem die Untergrundabsorption jeweils bei zwei verschiedenen Feldstärken des Magnetfelds gemessen wird. Dadurch kann der Messbereich erweitert werden.

Die beschriebene Einrichtung gestattet durch Eingabe entsprechender Sollwerte an der Eingangsklemme 488 einen Verlauf des Stromes in der Wicklung 400 des Elektromagneten 44, wie er in Fig. 6 dargestellt ist. Es erfolgt dann eine Messung bei starkem Magnetfeld, eine Messung bei schwachem Magnetfeld und eine Messung bei abgeschaltetem Magnetfeld entsprechend der zweiten, dritten und vierten Zeile von Fig. 6. Im Bereich der Flanken wird wieder der Dunkelstrom gemessen.

## Patentansprüche

1. Atomabsorptions-Spektrometer, bei welchem eine Kompensation der Untergrundabsorption mittels eines Magnetfeldes erfolgt das durch den Zeeman-Effekt eine periodische Linienverschiebung hervorruft, enthaltend
(a) eine linienemittierende Lichtquelle (16), welche ein Meßlichtbündel aussendet, mit dem Linienspektrum eines gesuchten Elements,
(b) eine Atomisierungseinrichtung (42) zum Atomisieren einer zu untersuchenden Probe zur Bildung einer Atomwolke, in welcher die in der Probe enthaltenen Atome des gesuchten Elements in atomarer Form vorliegen,
(c) ein optisches System (20,22), mittels dessen das Meßlichtbündel (16) durch die Atomnwolke der Atomisierungsvorrichtung (42) hindurchleitbar ist, und
(d) einen periodisch ein- und ausschaltbaren Elektromagneten (44) zur Erzeugung des Zeeman-Effektes am Ort der Atomisierungseinrichtung,
dadurch gekennzeichnet, daß
(e) eine Wandlerschaltung 216,218,220) zur Umwandlung der Netzwechselspannung in eine an einem Kondensdator (424) anliegende Gleichspannung vorgesehen ist,
(f) die Wicklung (400) des Elektromagneten (44) in der Diagonale einer Brückenschaltung liegt, die
- von der Gleichspannung der besagten Schaltung (216,218,220) gespeist ist,
- in diametral gegenüberliegenden Zweigen je eine Diode (402,404) und in den beiden anderen Zweigen je einen ersten und einen zweiten gesteuerten Schalter (408,406) aufweist,
(g) der erste der gesteuerten Schalter (408) von einer Steuereinrichtung (414) mit der Ein- und Ausschaltfrequenz des Elektromagneten (44) periodisch für eine den Aufbau und die Aufrechterhaltung des Magnetfeldes umfassende aktive Zeitspanne leitend gehalten und während der übrigen Zeit nichtleitend ist,
(h) der zweite der gesteuerten Schalter (406) während der besagten aktiven Zeitspanne des ersten Schalters (408) von einem Zweipunkt-Stromregler 484,486,472,466) zur Regelung eines vorgegebenen, durch die Wicklung (400) des Elektromagneten (44) fließenden Stromes gesteuert und während der übrigen Zeit ebenfalls nichtleitend ist, so daß ein im wesentlichen trapezförmiger Stromverlauf entsteht, und
(i) im nichtleitenden Zustand beider gesteuerter Schalter (406,408) die Wicklung (400) des Elektromagneten ee) in Reihe mit den Dioden (402,404) an dem Kondensator (424) der Wandlerschaltung (216,218,220) liegt.

2. Atomabsorptions-Spektrometer nach Anspruch 1, gekennzeichnet durch
(a) Lampensteuermittel, durch welche eine linienemittierende Lichtquelle (16) des Atomabsorptions-Spektrometers bei ausgeschaltetem und bei voll eingeschaltetem Elektromagneten (44) einschaltbar ist und während der ansteigenden und abfallenden Flanken des Stromverlaufs in der Wicklung (400) des Elektromagneten (44) ausgeschaltet ist und
(b) Mittel zur Bestimmung des Dunkelstromes und der Emissionsstrahlung des Atomabsorptions-Spektrometers während der Ausschaltzeiten der Lichtquelle.

3. Atomabsorptions-Spektrometer nach Anspruch 1 oder 2, dadurch gekennzeichnet, daß der Sollwert des Zweipunkt-Stromreglermittels während jeder Periode in wenigstens zwei Stufen veränderbar ist.

## Claims

1. Atomic absorption spectrometer in which background absorption is compensated by means of a magnetic field causing a periodic line shift due to the Zeeman effect, containing
(a) a line emitting light source (16) which emits a measuring light beam containing the line spectrum of a looked-for element,
(b) an atomising device (42) for atomising a sample to be investigated and for forming an atom cloud in which the atoms of the looked-for element, which atoms are contained in the sample, are present in the atomic state,
(c) an optical system (20,22) by means of which the measuring light beam (16) can be passed through the atom cloud of the atomising device (42),
(d) an electromagnet (44) which can be periodically energized and deenergized, for producing the Zeeman effect at the location of the atomising device,
characterised in that
(e) a converter circuit (216,218,220) is provided for converting the mains a.c. voltage into a d.c. voltage applied to a capacitor (424),
(f) the winding (400) of the electromagnet (44) is located in the diagonal of a bridge circuit which
- is supplied with the d.c. voltage of the said circuit (216,218,220),
- comprises a respective diode (402,404) in diametrically opposite branches and a respective first and second controlled switch (408,406) in the other two branches,
(g) the first one of the controlled switches (408) is periodically maintained conductive by control means (414) at the frequency of energizing and deenergizing the electromagnet (44), during an active time period encompassing the build-up and maintenance of the magnetic field, said first controlled switch being non-conductive during the remaining time,
(h) the second one of the controlled switches (406) is controlled by means of a two-step current controller (484,486,472,466) for regulating a predetermined current flowing through the winding (400) of the electromagnet (44) during said active time period of the first controlled switch (408), said second controlled switch likewise being non-conductive during the remaining time so that there results an essentially trapezoidal current waveform, and
(i) the winding (400) of the electromagnet (44) is connected in series with the diodes (402,404) to the capacitor (424) of the converter circuit (216,218,220) in the non-conductive state of both of the controlled switches (406,408).

2. Atomic absorption spectrometer according to claim 1, characterised by
(a) lamp control means by means of which a line emitting light source (16) of the atomic absorption spectrometer can be switched on when the electromagnet (44) is deenergized and when the electromagnet (44) is fully energized, said light source being switched off during the ascending and descending flanks of the current waveform in the winding (400) of the electromagnet (44) and
(b) means for determining the dark current and the emission radiation of the atomic absorption spectrometer during the switched-off periods of the light source.

3. Atomic absorption spectrometer according to claim 1 or 2, characterised in that the set point of the two-step current controller means is variable in at least two steps during each period.

## Revendications

1. Spectromètre à absorption atomique, dans lequel l'absorption de fond est compensée au moyen d'un champ magnétique provoquant un déplacement linéaire périodique par l'effet Zeeman, comprenant
(a) une source lumineuse (16) à émission linéaire émettant un faisceau lumineux de mesure ayant le spectre de lignes d'un élément recherché,
(b) un dispositif d'atomisation (42) destiné à l'atomisation d'un échantillon à examiner en vue de former un nuage d'atomes dans lequel les atomes de l'élément recherché compris dans l'échantillon se présentent sous une forme atomique,
(c) un système optique (20,22) au moyen duquel le faisceau lumineux de mesure (16) est susceptible d'être conduit à travers le nuage d'atomes du dispositif d'atomisation (42), et
(d) un électroaimant (44) susceptible d'être mis en et hors circuit périodiquement en vue d'engendrer l'effet Zeeman à l'endroit du dispositif d'atomisation,
caractérisé par le fait que
(e) un circuit de convertisseur (216,218,220) destiné à convertir la tension alternative du réseau en tension continue appliquée à un condensateur (424) est prévu,
(f) l'enroulement (400) de l'électroaimant (44) est disposé dans la diagonale d'un circuit à pont qui
- est alimenté par la tension continue dudit circuit (216,218,220),
- présente dans deux branches diamétralement opposées, une diode à la fois (402,404) et dans les deux autres branches respectivement un premier et un second commutateur commandé (408,406),
(g) le premier des commutateurs commandés (408) est tenu conducteur par un dispositif de commande (414) à la fréquence de mise en et hors circuit de l'électroaimant (44) périodiquement pour un temps actif comprenant l'établissement et le maintien du champ magnétique, et est non-conducteur pour le reste du temps,
(h) le second des commutateurs commandés (406) est commandé lors dudit temps actif du premier commutateur (408), par un régulateur de courant par plus ou moins (484,486,472,466) destiné à régler un courant prédéterminé s'écoulant par l'enroulement (400) de l'électroaimant (44), et pendant le temps qui reste, il est également non-conducteur de sorte qu'une course de courant généralement trapézoidale en résulte, et
(i) dans l'état non-conducteur des deux commutateurs commandés (406,408), l'enroulement (400) de l'électroaimant (44) est appliqué en série avec les diodes (402,404) au condensateur (424) du circuit de convertisseur (216,218,220).

2. Spectromètre à absorption atomique selon la revendication 1, caractérisé par
(a) des moyens de commande de lampe, au moyen desquels une source lumineuse à émission linéaire (16) du spectromètre à absorption atomique est susceptible d'être mise en circuit pendant que l'électroaimant (44) est mis hors circuit et lorsqu'il est complètement mis en circuit, et elle est mise hors circuit lors des flancs croissant et décroissant de la course de courant dans l'enroulement (400) de l'électroaimant (44), et
(b) des moyens destinés à déterminer le courant d'obscurité et du rayonnement d'émission du spectromètre à absorption atomique pendant le temps de mise hors circuit de la source lumineuse.

3. Spectromètre à absorption atomique selon la revendication 1 ou 2, caractérisé par le fait que la valeur désirée des moyens de régulateur de courant par plus ou moins est susceptible d'être variée au moins en deux étapes lors de chaque période.
